# EUROPEAN PATENT APPLICATION

(11) **EP 4 765 381 A1**
(43) Date of publication of application: **24.06.2026**
(21) Application number: 25794971.9
(22) Date of filing: 09.04.2025
(51) Int. Cl.: H01M 50/169, H01M 50/15, H01M 50/126, H01M 50/119, H01M 50/121, H01M 50/342, H01M 50/105

(54) **BATTERY CELL AND MANUFACTURING METHOD THEREFOR**

(30) Priority: 22.04.2024 KR 20240053477
(71) Applicant: LG Energy Solution, Ltd., Seoul 07335 (KR)
(72) Inventor: HWANG, Ji Young, Daejeon 34122 (KR); KIM, Sang Hun, Daejeon 34122 (KR); LEE, Jae Ho, Daejeon 34122 (KR); LEE, Ji Sun, Daejeon 34122 (KR)
(74) Representative: Goddar, Heinz J.
(86) International application number: PCT/KR2025/004806
(87) International publication number: WO 2025/225931

(57) **Abstract**

A battery cell according to an embodiment of the present disclosure includes a first outer packaging including a first metal layer and a resin layer attached to an inner surface of the first metal layer; a second outer packaging including a second metal layer; an electrode assembly housed between the first outer packaging and the second outer packaging; an adhesion portion in which the resin layer and the second metal layer are adhered to each other; a folding portion formed by folding an edge portion of the second outer packaging around an edge portion of the first outer packaging; and a weld portion in which the first metal layer and the second metal layer are welded together in the folding portion.

## Description

### TECHNICAL FIELD

### CROSS-REFERENCE TO RELATED APPLICATIONS

The present application claims priority to Korean Patent Application No. 10-2024-0053477 filed on April 22, 2024 in the Republic of Korea, the disclosure of which is incorporated herein by reference.

### TECHNICAL FIELD

The present disclosure relates to a battery cell in which an electrode assembly is housed between a first outer packaging and a second outer packaging, and a method for manufacturing the same.

### BACKGROUND ART

Recently, secondary batteries are attracting attention as a power source for electric vehicles (EVs) and hybrid electric vehicles (HEVs) proposed as a solution to solve the air pollution problem of the existing gasoline vehicles and diesel vehicles using fossil fuels.

While small mobile devices use one or more secondary batteries, medium- and large-sized devices such as electric vehicles use battery modules including a plurality of secondary batteries electrically connected to each other or battery packs including a plurality of battery modules electrically connect to each other due to the need for high output and large capacity.

Among the current commercially available secondary batteries, one of the most popular secondary batteries, lithium secondary batteries may be classified into a can type, a prismatic type and a pouch type according to the shape of the outer packaging. Among them, pouch-type secondary batteries have high energy density and are easy to stack and due to these advantages, they are widely used in medium and large-sized battery modules.

More recently, as the demand for secondary battery modules mounted on vehicles is increasing, there is a growing tendency for customers to demand stability. Customers expect and demand higher energy density of battery cells in the limited spaces of secondary battery modules, but in this case, the stability risk related to ignition and explosion of the battery cells increases as well.

A pouch-type battery cell generally has a structure in which an electrode assembly is housed in a pouch-type battery case, and a sealing portion is formed at the edge of the battery case. When the temperature of the battery cell rises over the critical temperature due to abnormal heat generation, the rapid increase in temperature and internal pressure may cause explosion and its consequential thermal runaway or flame propagation to other adjacent battery cells.

To prevent or sufficiently slow down thermal runaway, it is necessary to achieve the sealing portion with high heat resistance and sealing strength.

### SUMMARY

### TECHNICAL PROBLEM

The present disclosure is directed to providing a battery cell having a sealing portion with high heat resistance and sealing strength, and a method for manufacturing the same.

### TECHNICAL SOLUTION

A battery cell according to an embodiment of the present disclosure may include a first outer packaging including a first metal layer and a resin layer attached to an inner surface of the first metal layer; a second outer packaging including a second metal layer; an electrode assembly housed between the first outer packaging and the second outer packaging; an adhesion portion in which the resin layer and the second metal layer are adhered to each other; a folding portion formed by folding an edge portion of the second outer packaging around an edge portion of the first outer packaging; and a weld portion in which the first metal layer and the second metal layer are welded together in the folding portion.

An outer surface of the first metal layer may define an outer surface of the first outer packaging, and an inner surface of the second metal layer may define an inner surface of the second outer packaging.

The weld portion may overlap the adhesion portion in a thickness direction of the first outer packaging.

The resin layer may include a base resin layer; a first adhesive resin layer disposed on a side of the base resin layer and adhered to the first metal layer; and a second adhesive resin layer disposed on an opposite side of the base resin layer and adhered to the second metal layer in the adhesion portion. An adhesive property of the first adhesive resin layer and the second adhesive resin layer to metal may be higher than an adhesive property of the base resin layer to metal.

The base resin layer may have lower strain than the first adhesive resin layer and the second adhesive resin layer.

The second metal layer may cover an end of the resin layer and the first metal layer in the folding portion.

The folding portion may include a first folding portion folded to cover an end of the first outer packaging; and a second folding portion connected to the first folding portion and folded to contact the first metal layer. The weld portion may be formed in the second folding portion.

Each of the first metal layer and the second metal layer may include at least one material of stainless steel, copper or titanium.

The battery cell may further include an insulating layer covering an outer surface of the first metal layer and the second metal layer.

The battery cell may further include a venting guide portion in which the first metal layer and the second metal layer are unwelded or welded with lower weld strength than the weld portion in the folding portion.

A method for manufacturing a battery cell according to an embodiment of the present disclosure may include the steps of preparing a first outer packaging including a first metal layer and a resin layer attached to an inner surface of the first metal layer, and a second outer packaging including a second metal layer; placing an electrode assembly between the first outer packaging and the second outer packaging; adhering the resin layer and the second metal layer to each other; forming a folding portion in which an edge portion of the second outer packaging is folded around an edge portion of the first outer packaging; and welding the first metal layer and the second metal layer together in the folding portion.

The method for manufacturing the battery cell may further include, after the welding step, the step of attaching or coating an insulating layer to/on an outer surface of the first metal layer and the second metal layer.

The welding step may include unwelding or welding the first metal layer and the second metal layer with low weld strength in a part of the folding portion.

### ADVANTAGEOUS EFFECTS

According to an exemplary embodiment of the present disclosure, because the battery cell is sealed by welding the metal layers of the first outer packaging and the second outer packaging, the sealing of the battery cell may be maintained at high temperature and pressure, and have high sealing strength. Accordingly, it may be possible to delay an explosion in the event of abnormal operation of the battery cell, thereby preventing or sufficiently slowing down thermal runaway or flame propagation to other adjacent battery cells.

In addition, because the metal layers of the first outer packaging and the second outer packaging directly contact each other in the folding portion, it may be possible to improve the sealing quality and sealing strength of the weld portion without a process of removing the resin layer from the outer packaging.

Besides, the effects of the present disclosure may include effects that can be easily predicted by those skilled in the art from the configurations according to the exemplary embodiments of the present disclosure.

### BRIEF DESCRIPTION OF THE DRAWINGS

The accompanying drawings illustrate the exemplary embodiments of the present disclosure and together with the following detailed description, serve to provide a better understanding of the technical aspects of the present disclosure, and thus the present disclosure should not be construed as being limited to the drawings.
FIG. 1 is an assembly diagram of a battery cell according to an embodiment of the present disclosure.
FIG. 2 is a cross-sectional view showing the inside of a battery cell according to an embodiment of the present disclosure.
FIG. 3 is a plan view of a battery cell according to an embodiment of the present disclosure.
FIG. 4 shows a variation of the battery cell shown in FIG. 2.
FIG. 5 is a flowchart of a method for manufacturing a battery cell according to another embodiment of the present disclosure.

### DETAILED DESCRIPTION

Hereinafter, exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the subject matter of the present disclosure is omitted, and in affixing the reference numerals to the elements in each drawing, the identical or similar reference numerals are affixed to the identical or similar elements throughout the specification.

Additionally, the terms or words used in the specification and the appended claims should not be construed as limited to general and dictionary meanings, and rather, should be interpreted based on the meanings and concepts corresponding to the technical aspects of the present disclosure on the basis of the principle that the inventor is allowed to define the terms appropriately for the best explanation.

In the drawings, each component of a secondary battery according to an embodiment of the present disclosure is schematically depicted, and the size of the component or the thickness of the line may be somewhat exaggerated for convenience of understanding.

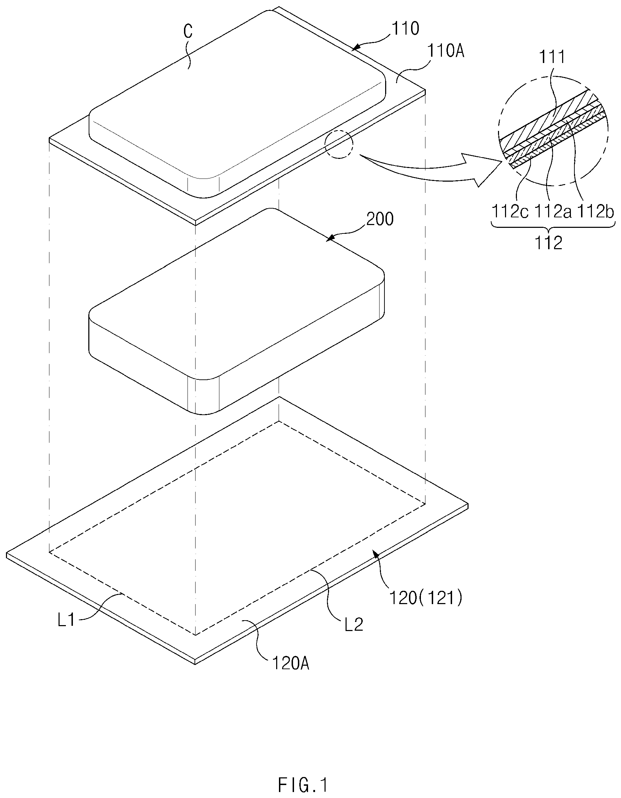

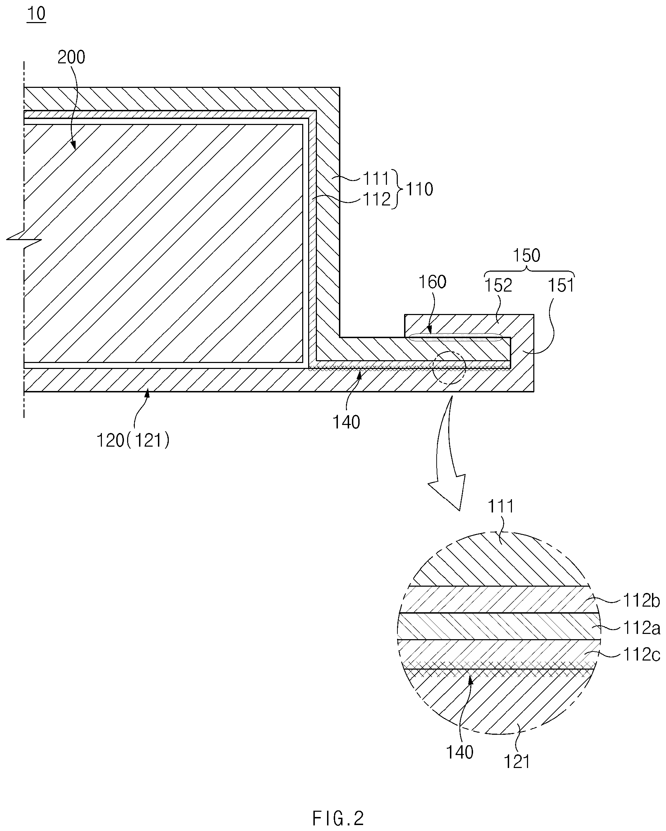

FIG. 1 is an assembly diagram of a battery cell according to an embodiment of the present disclosure, and FIG. 2 is a cross-sectional view showing the inside of the battery cell according to an embodiment of the present disclosure.

The battery cell 10 according to an embodiment of the present disclosure may include a first outer packaging 110, a second outer packaging 120 and an electrode assembly 200.

The electrode assembly 200 may include a positive electrode, a negative electrode and a separator interposed between the positive electrode and the negative electrode to insulate them. The electrode assembly 10 is not limited to a particular type. As an example, the electrode assembly 200 may be a stack-type electrode assembly including the positive electrode and the negative electrode stacked in an alternating manner with the separator interposed between them. As another example, the electrode assembly 200 may be a jelly roll-type electrode assembly including the sheet-shaped positive electrode and the sheet-shaped negative electrode wound together with the separator interposed between them.

The first outer packaging 110 and the second outer packaging 120 may form a battery case when sealed in a state that they accommodate the electrode assembly 200 together with an electrolyte solution.

The first outer packaging 110 and the second outer packaging 120 may be each manufactured as separate members.

The first outer packaging 110 may include a first metal layer 111 and a resin layer 112 attached to the inner surface of the first metal layer 111. The first outer packaging 110 may be manufactured by forming a laminated sheet including the first metal layer 111 and the resin layer 112.

The second outer packaging 120 may include a second metal layer 121. The second outer packaging 120 may be manufactured by forming a sheet made of the second metal layer 121. However, the second outer packaging 120 may further include a resin layer (not shown) attached to the outer surface of the second metal layer 121.

The resin layer 112 may form the innermost layer of the first outer packaging 110. That is, the resin layer 112 may define the inner surface of the first outer packaging 110. The resin layer 112 of the first outer packaging 110 and the second metal layer 121 of the second outer packaging 120 may be adhered to each other to form an adhesion portion 140 as described below.

More specifically, the resin layer 112 may include a base resin layer 112a, a first adhesive resin layer 112b and a second adhesive resin layer 112c. The first adhesive resin layer 112b may be disposed on one side of the base resin layer 112a, and the second adhesive resin layer 112c may be disposed on the other side of the base resin layer 112a. More specifically, the first adhesive resin layer 112b and the second adhesive resin layer 112c may be attached to two sides of the base resin layer 112a.

The base resin layer 112a may have lower strain than the first adhesive resin layer 112b and the second adhesive resin layer 112c. Accordingly, when heat and pressure are applied to the resin layer 112 to form the adhesion portion 140 as described below, the base resin layer 112a may be maintained at an appropriate thickness without being overcompressed.

The first adhesive resin layer 112b may be adhered to the first metal layer 111. By the first adhesive resin layer 112b, the first metal layer 111 and the resin layer 112 of the first outer packaging 110 may be kept in the adhered state.

The second adhesive resin layer 112c may be adhered to the second metal layer 121. By the second adhesive resin layer 112c, the resin layer 112 of the first outer packaging 110 and the second metal layer 121 of the second outer packaging 120 may be adhered to each other at the adhesion portion 140 as described below.

Accordingly, the adhesive property of the first adhesive resin layer 112b and the second adhesive resin layer 112c to metal may be higher than the adhesive property of the base resin layer 112a to metal.

For example, the base resin layer 112a may include polypropylene (PP), and preferably crosslinked PP, random PP or homo PP. In addition, the first adhesive resin layer 112b and the second adhesive resin layer 112c may include polypropylene-grafted-maleic anhydride (PP-g-MA). However, the present disclosure is not limited thereto, and persons having ordinary skill in the art will be able to select an appropriate material from among known materials that satisfy the characteristics required for the base resin layer 112a, the first adhesive resin layer 112b and the second adhesive resin layer 112c.

The first metal layer 111 may form the outermost layer of the first outer packaging 110. That is, the first metal layer 111 may define the outer surface of the first outer packaging 110.

The second metal layer 121 may form the innermost layer of the second outer packaging 120. That is, the second metal layer 121 may define the inner surface of the second outer packaging 120.

In addition, the first metal layer 111 of the first outer packaging 110 and the second metal layer 121 of the second outer packaging 120 may be welded to each other to form a weld portion 160 as described below. It will be described in detail below.

Each of the first metal layer 111 and the second metal layer 121 may include at least one material of stainless steel (STS), copper or titanium. Because the melting point of stainless steel, copper and titanium are higher than 1000°C, the first outer packaging 110 and the second outer packaging 120 may have high heat resistance, compared to aluminum (Al) having the melting point of approximately 660°C commonly used in battery cells.

Because the second metal layer 121 defines the inner surface of the second outer packaging 120, the second metal layer 121 may directly contact the electrolyte solution housed in a cup portion C together with the electrode assembly 200.

In relation to this, a conventional pouch-type battery case including the aluminum layer suffers from exposure of the aluminum layer to the electrolyte solution when the innermost layer or the polymer layer (for example, polypropylene (PP)) is broken. As a consequence, the aluminum layer is negatively charged, which accelerates corrosion and moisture infiltration of the aluminum layer by aluminum-lithium alloys (Al-Li alloys) reaction, causing performance degradation of the battery. In contrast, because the second metal layer 121 of this embodiment includes at least one material of stainless steel, copper or titanium, the above-described reaction does not occur when exposed to the electrolyte solution.

The first outer packaging 110 and the second outer packaging 120 may provide an accommodation space in which the electrode assembly 200 may be housed. The first outer packaging 110 and the second outer packaging 120 may have a pouch shape as a whole, but the shape is not limited thereto.

More specifically, at least one of the first outer packaging 110 or the second outer packaging 120 may have the cup portion C in which the electrode assembly 200 may be housed. The cup portion C having a recessed shape may define the accommodation space in which the electrode assembly 200 may be housed.

Hereinafter, as shown in FIGS. 1 and 2, the first outer packaging 110 having the cup portion C and the second outer packaging 120 covering the cup portion C of the first outer packaging 110 will be described by way of example. However, the present disclosure is not limited thereto. The second outer packaging 120 may have the cup portion C and the first outer packaging 110 may cover the cup portion C of the second outer packaging 120. Alternatively, each of the first outer packaging 110 and the second outer packaging 120 may have the cup portion C, and the two cup portions C may be connected to each other to define the accommodation space in which the electrode assembly 200 may be housed.

The first outer packaging 110 and the second outer packaging 120 may include edge portions 110A, 120A, respectively. The edge portion 110A, 120A may be referred to as a terrace portion.

The edge portion 110A of the first outer packaging 110 may refer to an area around the cup portion C. The edge portion 120A of the second outer packaging 120 may refer to an area facing the edge portion 110A of the first outer packaging 110 and its outside area.

The edge portion 110A of the first outer packaging 110 and the edge portion 120A of the second outer packaging 120 may be sealed to each other, and thus, the electrode assembly 200 may be housed between the first outer packaging 110 and the second outer packaging 120.

Meanwhile, the battery cell 10 may include a folding portion 150 formed by folding the edge portion 120A of the second outer packaging 120 around the edge portion 110A of the first outer packaging 110.

More specifically, the edge portion 120A of the second outer packaging 120 may get hemmed along the end of the edge portion 110A of the first outer packaging 110. To this end, the edge portion 120A of the second outer packaging 120 may be wider than the edge portion 110A of the first outer packaging 110. More specifically, the edge portion 120A of the second outer packaging 120 may be longer than the edge portion 110A of the first outer packaging 110 in the length and width directions.

The folding portion 150 may be formed along the periphery of the battery cell 10.

The first line L1 and the second line L2 shown in FIG. 1 indicate the fold lines of the edge portion 120A of the second outer packaging 120 by way of illustration.

The first line L1 may be parallel to the length direction of the battery cell 10, and the second line L2 may be parallel to the width direction of the battery cell 10. The first line L1 and the second line L2 may match the end of the edge portion 110A of the first outer packaging 110.

The first line L1 and the second line L2 may be folded in a sequential order or in reverse order. A corner portion where the first line L1 and the second line L2 overlap at the edge portion 120A of the second outer packaging 120 may be double folded. However, the present disclosure is not limited thereto, and persons having ordinary skill in the art will be able to tailor the corner portion into an appropriate shape.

In the folding portion 150, the second metal layer 121 may cover the end of the resin layer 112 and the first metal layer 111.

More specifically, the folding portion 150 may include a first folding portion 151 folded to cover the end of the first outer packaging 110, and a second folding portion 152 connected to the first folding portion 151 and folded to contact the first metal layer 111.

The first folding portion 151 may be formed by folding a part of the outer portion of the edge portion 120A of the second outer packaging 120. The end of the first outer packaging 110 may face the inner surface of the first folding portion 151.

The end of the first outer packaging 110 may be in contact with or adjacent to the inner surface of the first folding portion 151. However, the present disclosure is not limited thereto, and a predetermined gap may be formed between the end of the first outer packaging 110 and the inner surface of the first folding portion 151.

The second folding portion 152 may be formed by folding a part of the outer portion of the first folding portion 151. The inner surface of the second folding portion 152 may contact the outer surface of the edge portion 110A of the first outer packaging 110. Accordingly, the second metal layer 121 that forms the inner surface of the second folding portion 152 may contact the first metal layer 111 that forms the outer surface of the first outer packaging 110. Here, the first metal layer 111 and the second metal layer 121 that contact each other may be welded together to form the weld portion 160 as described below. That is, the weld portion 160 may be formed in the second folding portion 152.

Meanwhile, the battery cell 10 may include the adhesion portion 140 and the weld portion 160.

The adhesion portion 140 may be formed by adhering the resin layer 112 of the first outer packaging 110 and the second metal layer 121 of the second outer packaging 120 to each other. More specifically, the resin layer 112 of the edge portion 110A of the first outer packaging 110 may be adhered to the second metal layer 121 of the edge portion 120A of the second outer packaging 120 to form the adhesion portion 140. More specifically, the second adhesive resin layer 112c of the edge portion 110A of the first outer packaging 110 may be adhered to the second metal layer 121 of the edge portion 120A of the second outer packaging 120 to form the adhesion portion 140. The adhesion portion 140 may be formed by heat fusion, but is not limited thereto.

The adhesion portion 140 may be disposed at an inner position than the folding portion 150. The adhesion portion 140 may be extended along the edge portion 110A of the first outer packaging 110 and the edge portion 120A of the second outer packaging 120.

The weld portion 160 may be formed by welding the first metal layer 111 and the second metal layer 121 in the folding portion 150. More specifically, the first metal layer 111 and the second metal layer 121 that contact each other in the second folding portion 152 may be welded together to form the weld portion 160. The weld portion 160 may be formed by laser welding, but is not limited thereto.

Because the metal layers 111, 121 are welded together, the weld portion 160 may have higher sealing strength than the adhesion portion 140. Accordingly, the sealing strength of the battery cell 10 may be significantly increased.

The weld portion 160 may be extended along the folding portion 150. The weld portion 160 may be formed along the periphery of the battery cell 10.

The weld portion 160 may overlap the adhesion portion 140 in the thickness direction of the first outer packaging 110. The weld portion 160 and the adhesion portion 140 may face each other with the edge portion 110A of the first outer packaging 110 interposed between them. More specifically, the adhesion portion 140 may be formed on the inner surface of the edge portion 110A of the first outer packaging 110, and the weld portion 160 may be formed on the outer surface.

As described above, the first metal layer 111 may define the outer surface of the first outer packaging 110, and the second metal layer 121 may define the inner surface of the second outer packaging 120. Accordingly, the first metal layer 111 and the second metal layer 121 may directly contact each other in the folding portion 150, and high sealing quality and strength of the weld portion 160 may be achieved.

In relation to this, it is well known that a conventional laminated sheet includes two polymer layers (for example, polypropylene (PP) and polyethylene terephthalate (PET)) that form an outer surface and an inner surface, and a metal layer (for example, aluminum (Al)) interposed between the two polymer layers. When it is assumed that the first outer packaging and the second outer packaging are manufactured by forming the conventional laminated sheet, in the folding portion where the edge portion of the second outer packaging is folded around the edge portion of the first outer packaging, the polymer layers are disposed between the first metal layer of the first outer packaging and the second metal layer of the second outer packaging. Accordingly, when the first metal layer and the second metal layer are welded together in the folding portion, weldability becomes poor by the polymer layers. To solve this problem, after a removal process of removing the polymer layers from the edge portions of the first outer packaging and the second outer packaging, a welding process of welding the first metal layer and the second metal layer together may be performed, but this makes the process of manufacturing the battery cell complex. In contrast, the battery cell 1 of this embodiment does not need the removal process.

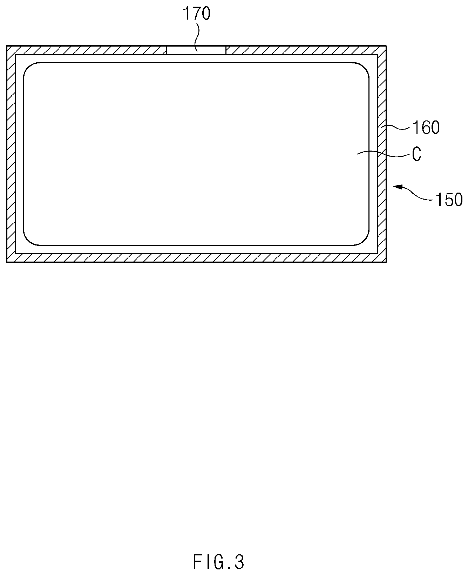

FIG. 3 is a plan view of the battery cell according to an embodiment of the present disclosure.

The battery cell 10 may further include a venting guide portion 170 where the first metal layer 111 and the second metal layer 121 are unwelded or welded with lower weld strength than the weld portion 160 in the folding portion 150.

The venting guide portion 170 may be disposed at the folding portion 150. More specifically, along the peripheral direction of the battery cell 10, the weld portion 160 may be disposed at a part of the folding portion 150, and the venting guide portion 170 may be disposed at the other part of the folding portion 150.

The venting guide portion 170 may include at least one venting guide portion 170 along the periphery of the battery cell 10. The battery cell 10 is easy to properly design the extent of gas venting in the battery cell 10 by adjusting the length, number or position of the venting guide portion 170.

Because the sealing strength of the adhesion portion 140 is lower than the sealing strength of the weld portion 160, the adhesion portion 140 may be broken when the internal pressure of the battery cell 10 rises above a predetermined level. In this instance, gas in the battery cell 10 may be released to the outside of the battery cell 10 through the venting guide portion 170.

When the venting guide portion 170 is formed by non-welding of the first metal layer 111 and the second metal layer 121 in the folding portion 150, gas in the battery cell 10 may be released to the outside of the battery cell 10 through a space between the first metal layer 111 and the second metal layer 121 of the venting guide portion 170.

When the venting guide portion 170 is formed by welding the first metal layer 111 and the second metal layer 121 with low weld strength in the folding portion 150, the welded part with low weld strength may be broken when the internal pressure of the battery cell 10 rises, and gas in the battery cell 10 may be released to the outside of the battery cell 10 through the space between the first metal layer 111 and the second metal layer 121 of the venting guide portion 170.

The venting guide portion 170 may achieve directional venting to release gas in a preset direction. Accordingly, it may be possible to prevent explosion of the battery cell 10 and its consequential thermal runaway or flame propagation to other adjacent battery cells.

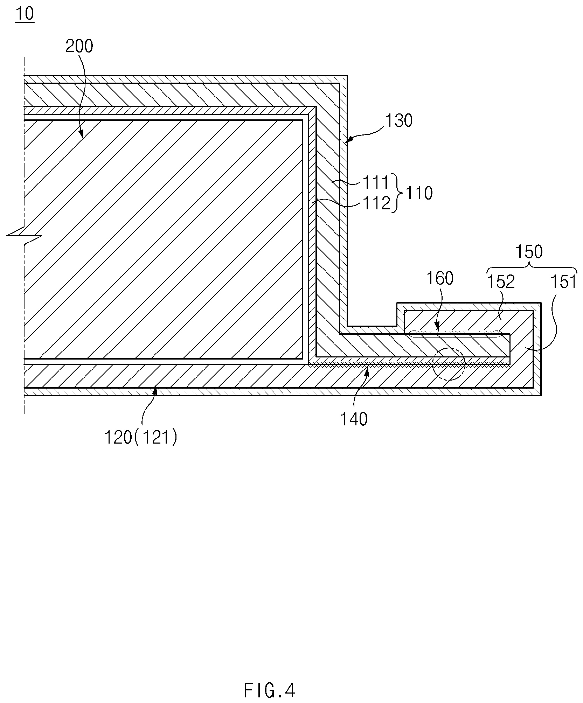

FIG. 4 shows a variation of the battery cell shown in FIG. 2.

The battery cell 10 may further include an insulating layer 130 covering the outer surface of the first metal layer 111 and the second metal layer 121.

The insulating layer 130 may be formed after the weld portion 160 is formed. The insulating layer 130 may be attached to or coated on the outer surface of the first metal layer 111 and the second metal layer 121. By the insulating layer 130, the battery cell 10 may maintain insulation from other adjacent battery cells or components.

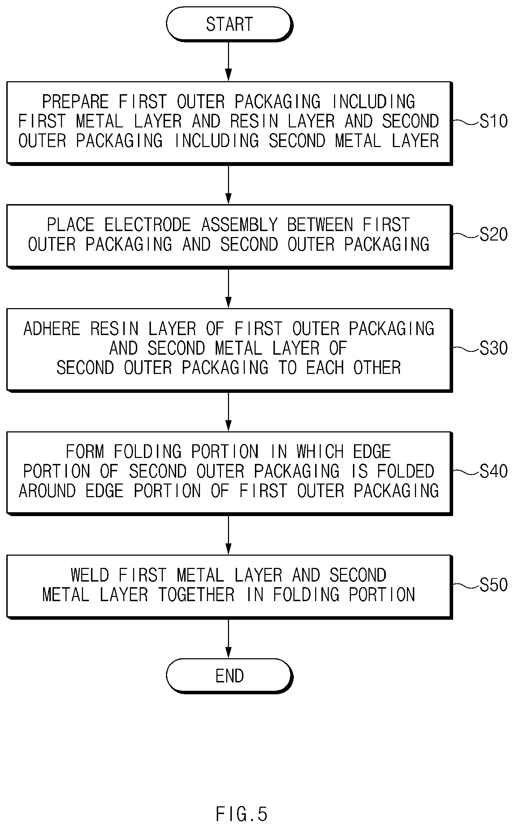

FIG. 5 is a flowchart of a method for manufacturing the battery cell according to another embodiment of the present disclosure.

Hereinafter, the above-described method for manufacturing the battery cell 10 will be described as another embodiment of the present disclosure.

The method for manufacturing the battery cell according to another embodiment of the present disclosure may include the steps of (S10) preparing the first outer packaging 110 including the first metal layer 111 and the resin layer 112 and the second outer packaging 120 including the second metal layer 121 (hereinafter, preparation step), (S20) placing the electrode assembly 200 between the first outer packaging 110 and the second outer packaging 120 (hereinafter, accommodation step), (S30) adhering the resin layer 112 and the second metal layer 121 to each other (hereinafter, adhesion step), (S40) forming the folding portion 150 where the edge portion 120A of the second outer packaging 120 is folded around the edge portion 110A of the first outer packaging 110 (hereinafter, folding step), and (S50) welding the first metal layer 111 and the second metal layer 121 in the folding portion 150 (hereinafter, welding step).

In the preparation step (S10), the recessed cup portion C may be formed in at least one of the first outer packaging 110 or the second outer packaging 120. In addition, the edge portion 120A of the second outer packaging 120 may be wider than the edge portion 110A of the first outer packaging 110.

In the accommodation step (S20), in a state that the electrode assembly 200 is housed in the cup portion C, the edge portion 110A of the first outer packaging 110 and the edge portion 120A of the second outer packaging 120 may contact each other. Accordingly, the electrode assembly 200 may be housed between the first outer packaging 110 and the second outer packaging 120. In this instance, the edge portion 120A of the second outer packaging 120 may protrude out of the edge portion 110A of the first outer packaging 110.

In the adhesion step (S30), the resin layer 112 of the edge portion 110A of the first outer packaging 110 may be adhered to the second metal layer 121 of the edge portion 120A of the second outer packaging 120. To do so, the edge portion 110A of the first outer packaging 110 and the edge portion 120A of the second outer packaging 120 may undergo heat fusion while in contact with each other.

In the folding step (S40), the edge portion 120A of the second outer packaging 120 may be folded around the end of the edge portion 110A of the first outer packaging 110, and the folding portion 150 may be formed. The first metal layer 111 and the second metal layer 121 may contact each other in the folding portion 150.

In the welding step (S50), the first metal layer 111 and the second metal layer 121 may be welded together in the folding portion 150, and the weld portion 160 may be formed. The weld portion 160 may be formed along the peripheral direction of the battery cell 10.

In the welding step (S50), the first metal layer 111 and the second metal layer 121 may be unwelded or welded with low weld strength in a part of the folding portion 150, and the venting guide portion 170 may be formed. The welding with low weld strength refers to having lower sealing strength than the sealing strength of the weld portion 160. More specifically, along the peripheral direction of the battery cell 10, the weld portion 160 may be formed in a part of the folding portion 150, and the venting guide portion 170 may be formed in the other part.

Although not shown in FIG. 5, the method for manufacturing the battery cell may further include the step of attaching to or coating the insulating layer 130 to/on the outer surface of the first metal layer 111 and the second metal layer 121. This step may be performed after the welding step (S50). Accordingly, the insulating layer 130 may prevent the decrease in sealing quality of the weld portion 160, and insulate the battery cell 10 from other components with reliability.

The foregoing description has been made to describe the technical aspects of the present disclosure by way of example, and persons having ordinary skill in the technical field pertaining to the present disclosure would have made a variety of modifications and changes without departing from the essential features of the present disclosure.

Therefore, the disclosed embodiments are provided to describe the technical aspects of the present disclosure but not intended to be limiting, and the technical scope of the present disclosure is not limited by these embodiments.

The scope of protection of the present disclosure should be interpreted by the appended claims, and it should be interpreted that all the technical aspects within the equivalent scope are included in the scope of protection of the present disclosure.

**[List of Reference Numerals]**

| | | | |
|---|---|---|---|
| 10: | Battery cell | 110: | First outer packaging |
| 111: | First metal layer | 112: | Resin layer |
| 112a: | Base resin layer | 112b: | First adhesive resin layer |
| 112c: | Second adhesive resin layer | 120: | Second outer packaging |
| 121: | Second metal layer | 130: | Insulating layer |
| 140: | Adhesion portion | 150: | Folding portion |
| 151: | First folding portion | 152: | Second folding portion |
| 160: | Weld portion | 170: | Venting guide portion |
| 200: | Electrode assembly | | |

## Claims

1. A battery cell comprising:
a first outer packaging including a first metal layer and a resin layer attached to an inner surface of the first metal layer;
a second outer packaging including a second metal layer;
an electrode assembly housed between the first outer packaging and the second outer packaging;
an adhesion portion in which the resin layer and the second metal layer are adhered to each other;
a folding portion formed by folding an edge portion of the second outer packaging around an edge portion of the first outer packaging; and
a weld portion in which the first metal layer and the second metal layer are welded together in the folding portion.

2. The battery cell according to claim 1,
wherein an outer surface of the first metal layer defines an outer surface of the first outer packaging, and
wherein an inner surface of the second metal layer defines an inner surface of the second outer packaging.

3. The battery cell according to claim 1,
wherein the weld portion overlaps the adhesion portion in a thickness direction of the first outer packaging.

4. The battery cell according to claim 1,
wherein the resin layer includes:
a base resin layer;
a first adhesive resin layer disposed on a side of the base resin layer and adhered to the first metal layer; and
a second adhesive resin layer disposed on an opposite side of the base resin layer and adhered to the second metal layer in the adhesion portion, and
wherein an adhesive property of the first adhesive resin layer and the second adhesive resin layer to metal is higher than an adhesive property of the base resin layer to metal.

5. The battery cell according to claim 4,
wherein the base resin layer has lower strain than the first adhesive resin layer and the second adhesive resin layer.

6. The battery cell according to claim 1,
wherein the second metal layer covers an end of the resin layer and the first metal layer in the folding portion.

7. The battery cell according to claim 1,
wherein the folding portion includes:
a first folding portion folded to cover an end of the first outer packaging; and
a second folding portion connected to the first folding portion and folded to contact the first metal layer, and
wherein the weld portion is formed in the second folding portion.

8. The battery cell according to claim 1,
wherein each of the first metal layer and the second metal layer includes at least one material of stainless steel, copper or titanium.

9. The battery cell according to claim 1, further comprising:
an insulating layer covering an outer surface of the first metal layer and the second metal layer.

10. The battery cell according to claim 1, further comprising:
a venting guide portion in which the first metal layer and the second metal layer are unwelded or welded with lower weld strength than the weld portion in the folding portion.

11. A method for manufacturing a battery cell, comprising the steps of:
preparing a first outer packaging including a first metal layer and a resin layer attached to an inner surface of the first metal layer, and a second outer packaging including a second metal layer;
placing an electrode assembly between the first outer packaging and the second outer packaging;
adhering the resin layer and the second metal layer to each other;
forming a folding portion in which an edge portion of the second outer packaging is folded around an edge portion of the first outer packaging; and
welding the first metal layer and the second metal layer together in the folding portion.

12. The method for manufacturing the battery cell according to claim 11, after the welding step, further comprising the step of:
attaching or coating an insulating layer to/on an outer surface of the first metal layer and the second metal layer.

13. The method for manufacturing the battery cell according to claim 11,
wherein the welding step comprises unwelding or welding the first metal layer and the second metal layer with low weld strength in a part of the folding portion.
